# EUROPEAN PATENT SPECIFICATION

(11) **EP 0 484 818 B1**
(45) Date of publication and mention of the grant of the patent: **15.01.1997**
(21) Application number: 91118524.7
(22) Date of filing: 30.10.1991
(51) Int. Cl.: B29C 55/18, B29C 55/08

(54) **Modification of LCP film by nip rolls**
Umarbeitung einer flüssigkristallinen Folie durch Walzen
Modification d'un film à cristaux liquides par calandrage

(30) Priority: 07.11.1990 US 610288
(43) Date of publication of application: 13.05.1992
(73) Proprietor: HOECHST CELANESE CORPORATION, Somerville, N.J. 08876 (US)
(72) Inventor: Roth, Douglas Duane, Dr., Taylors, Greenville, SC (US)
(74) Representative: Meyer-Dulheuer, Karl-Hermann, Dr.

(56) References cited:
- WORLD PATENTS INDEX LATEST Section Ch, Week 33, Derwent Publications Ltd., London, GB; Class A, AN 88-232818 & JP-A-63 168 327 (UNITIKA) 12 July 1988
- WORLD PATENTS INDEX LATEST Section Ch, Week 37, Derwent Publications Ltd., London, GB; Class A, AN 90-279211 & JP-A-2 196 626 (CHISSO) 3 August 1990 & US-A-5039471
- WORLD PATENTS INDEX LATEST Section Ch, Week 12, Derwent Publications Ltd., London, GB; Class A, AN 88-080203 & JP-A-63 031 729 (SUMITOMO BAKELITE) 10 February 1988

## Description

The present invention relates to the modification and improvement of liquid crystal polymer ("LCP") film, particularly where such modification is accomplished by pressing the film with a roll.

Polymers having a liquid crystal structure, and films made therefrom, are well-known in the art.

LCP films develop a high degree of anisotropy when they are extruded; the crystalline domains tend to line up or orient themselves in the machine direction. This anisotropy causes the film to exhibit different properties in the machine direction than in the transverse direction; e.g., the strength of the film is significantly less in the transverse direction. Because of this, LCP films are not suitable for some purposes.

To overcome the imbalance in the properties of oriented LCP film, several techniques have been developed to biaxially or multiaxially orient such films; in each case, the object is to reduce the degree of anisotropy in the film. For example, U.S. Pat. 4,898,924 describes blowing, rotational shearing, and cross-streching. These methods each have advantages and disadvantages. Some of the limitations of these and other techniques presently in use include: poor control of the final thickness and/or degree of orientation of the film; lack of simplicity; high cost; and, the need for special equipment dedicated to the practice of the technique.

The present invention is a process for reducing the anisotropy of an extruded liquid crystal polymer film having an anisotropic molecular orientation, comprising: calendering said extruded liquid crystal polymer film in a direction other than that in which said film has said molecular orientation, with at least one roll having a temperature sufficient to soften, but not liquify said film. The roll pressure and roll gap may be adjusted as desired to produce a suitably balanced film.

An important object of the present invention is to provide a new method for reducing the anisotropy of an LCP film and producing a film having more balanced properties.

Other objects of the present invention will be apparent to those skilled in the art from the following description and the appended claims.

In one embodiment according to the present invention, an LCP film is extruded by conventional methods, producing a highly anisotropic film oriented in the machine direction. This film is then fed in the transverse direction between two heated nip rolls. The rolls are spaced so that the gap is smaller than the thickness of the oriented film, and are preset to apply a pressure sufficient to maintain the desired roll spacing. The exact gap size and pressure used depends upon the desired degree of calendering and the nature of the material being processed.

In one preferred embodiment of the method of this invention, a release film is used. A release film is a film that will not adhere to either the roll or the LCP film, and which is placed therebetween to prevent the LCP film from sticking to the roll. The use of a release film introduces another variable that affects the ultimate thickness of the LCP film; the thicker the release film is, the smaller the gap will be through which the LCP may pass, and the thinner the LCP film will be after calendering.

The temperature of the rolls is high enough to soften, but not liquify, the polymeric film so that it will deform and flow under pressure from the rolls. The exact temperature chosen will depend upon the type of LCP being calendered; the invention is not limited to any particular temperature or temperature range. Those skilled in the art will know, or easily be able to determine, the appropriate temperatures to use for various LCP films. These temperatures will usually, but not necessarily, fall somewhere between about 150°C and about 270°C.

Temperatures in the approximate range of 200-240°C are typically suitable in the practice of this invention.

The present invention may be practiced on a film comprising either a single liquid crystal polymer or a blend of polymers. Any anisotropic polymer or polymer blend may be modified by this method, including an anisotropic blend comprising an LCP and a non-LCP, as well as filled resins, coextrudates, and laminates.

The LCP film fed into the nip rolls may have virtually any thickness before calendering, provided the calendering equipment is suitably chosen or designed to accommodate the film being calendered. Those skilled in the art will know or readily be able to determine for each LCP whether a particular film thickness may be calendered as taught herein. The precalendered thickness of the film may affect somewhat the drawdown ratios that are practical in practicing the invention, but generally the drawdown ratio is only limited by the versatility of the rolling equipment used. Of course, if a film is rolled too thin, holes may appear; the practical limit for thinness is dependent upon the type of LCP film and the uniformity with which the equipment calenders the film.

LCP film may be calendered in any direction. However, calendering in the transverse direction, perpendicular to the machine direction, is preferable in the practice of this invention. The film may also be modified to a lesser extent by calendering diagonally, in a direction inbetween the transverse direction and the machine direction. It is recommended to calender in a direction as close to the transverse direction as possible. Calendering in the machine direction is not recommended, since it cannot be expected to provide the desired significant reduction in anisotropy and improvement in properties.

The present invention may produce a variety of benefits or modifications to an LCP film. These changes will depend qualitatively and quantitatively upon the nature of the film and the calendering parameters used in practicing the invention. Examples of potential modifications include: improved tear resistance, tear propagation resistance, tensile strength and modulus in the transverse direction; more balanced coefficient of expansion; reduced elongation; reduced shrinkage; thin films having uniform thickness.

The degree of modification of the film treated according to the method of this invention generally increases as the drawdown ratio increases; the drawdown ratio is the ratio of the film thickness prior to calendering in accordance with the invention to the film thickness after calendering.

An interesting modification for certain mechanical and electronic applications is the effect that the method of this invention can have on the coefficient of thermal expansion ("CTE") of an LCP film. Not only can a film having a more balanced CTE be made, but by carefully choosing the LCP composition and thickness and the drawdown ratio it is possible to obtain a film having a CTE in both directions that closely matches that of a chosen material, e.g., copper, aluminum, steel, glass, and the like. Where the film is to be used in conjunction with such a chosen material, it is often very advantageous to have similar CTE values.

The following Examples illustrate the invention, although the invention is not limited to the embodiments illustrated.

### Example I

Conventionally extruded films of a polymer which is the co-polymerization product of hydroxynaphthoic acid and hydroxybenzoic acid monomers, commercially available from the Hoechst Celanese Corporation under the tradename Vectra^{(R)} (Grade A910), were calendered, on heated nip rolls; some samples were rolled in the transverse direction and others in the machine direction.

The roll temperature was 253°C and the roll speed was 16 inches per minute. Two different such films were calendered: film A which was 2.6 mils thick after extrusion; and film B which was 9.5 mils thick after extrusion.

A polyimide release film was used to prevent the Vectra^{(R)} from sticking to the rolls. The roll gap and release film thickness were adjusted to vary the drawdown ratio ("DDR") of the film; the DDR is defined as the ratio of the thickness of the film as extruded to the thickness of the calendered film.

Transverse calendering increased the transverse direction modulus and tensile strength, with greater increases in these properties occurring at higher DDRs. Machine direction modulus and strength were reduced, suggesting a lower degree of orientation in the machine direction. Tensile elongation decreased in both directions.

Machine direction rolling caused either a reduction or no change in the transverse direction tensile strength and modulus, and great decreases in machine direction strength and modulus. Elongation was reduced in both directions.

Hot air shrinkage at 190°C was measured on uncalendered film B and on some calendered samples. Although the changes may not be statistically significant, it appears that transverse direction rolling decreases shrinkage while machine direction rolling increases shrinkage.

The thermal expansion coefficient ("CTE") was measured over a temperature range of -100 to 200°C. Uncalendered film B had a CTE of 22 ppm/°C in the machine direction, close to copper at 17. The transverse CTE was 331, which is very high. Transverse rolling reduced the transverse CTE and raised the machine direction CTE, producing a more balanced film. A 5 mil film with CTEs of 4 and 76 that is transversely rolled to a DDR of about two could have a CTE close to copper in both directions. Machine direction rolling had similar but lesser effects on the CTE in both directions.

Film B samples were tested with both the Elmendorf tear test and a tear propagation test. The machine direction tear strength decreased from 8.2 g/mil to 6.7 after transverse rolling and increased to 10.5 after machine direction rolling. Transverse tear strength could not be measured because the film samples tore in the machine direction.

In the tear propagation test, an initial slit was made in the film and an instron used to measure the force needed to continue the tear. Film B had a machine direction value of 9.1 g/mil, but none in the transverse direction because the film tore in the machine direction. Transverse calendering improved both values, while machine direction rolling only improved the transverse tear propagation value.

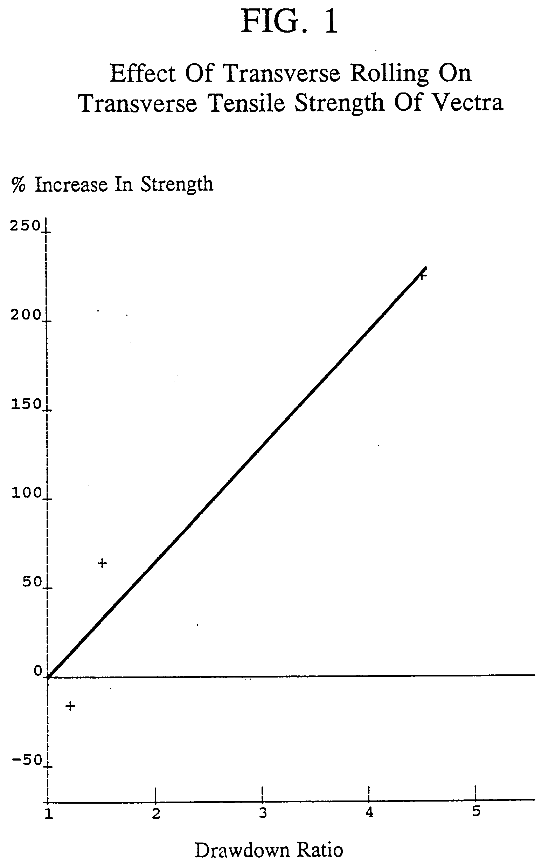

Table I summarizes the results of this experiment. Fig. 1 shows the relationship between DDR and transverse tensile strength due to transversely calendering the film in this experiment.

**Table I**

| (Machine/Transverse) | | | | | |
|---|---|---|---|---|---|
| | Unrolled film A | Transv. rolled A | Unrolled film B | Transv. rolled B | Mach.dir. rolled B |
| Thickness (mils): | 2.6 | 0.65 | 9.5 | 6.3, 7.6 | 6.6, 7.7 |
| Drawdown ratio: | | 4.0 | | 1.5, 1.2 | 1.4, 1.2 |
| Elong. (%): | -/27 | -/11 | 8.1/36 | 5.2/7.6, | 4.4/8.8, |
| | | | | 4.4/4.0 | 3.8/7.5 |
| Modulus (Mpsi): | -/.25 | -/.54 | .99/.18 | .36/.40, | .24/.16, |
| | | | | .30/.18 | .31/.11 |
| Strength (Kpsi): | -/7.2 | -/23 | 56/8.4 | 22/14, | 11/8.1, |
| | | | | 10/7.4 | 10/7.6 |
| Shrinkage at 190°C: | | | -.03/.36 | -.08/.06 | |
| | | | | 0/-0.7 | -.25/.83 |
| CTE (ppm/0C): | | | 22/331 | | |
| | | | | 172/212 | 97/304 |
| Elm. tear (g/mil): | | | 8.2/- | | |
| | | | | 6.7/- | 10.5/- |
| Tear propagation (g/mil): | | | 9.1/0 | | |
| | | | | 55/30 | 8.3/10 |

### Example II

Film samples made from Vectra^{(R)} were calendered in the transverse direction between two nip rolls at a temperature of 220°C. In each case, the gap was adjusted to achieve a film thickness reduction of about 30%. These samples included both unfilled Vectra^{(R)} A950 and mineral-filled Vectra^{(R)} A540 (both grades are available from Hoechst Celanese Corporation).

The calendered samples showed a marked increase in elongation, tensile strength, and modulus in the transverse direction, but little or no improvement in these properties in the machine direction. The results are presented in Table II.

**Table II**

| Before/After Treatment | Thickness (mils) | | Strength (Kpsi) | | Modulus (Mpsi) | | Elongation % | |
|---|---|---|---|---|---|---|---|---|
| | MD | TD | MD | TD | MD | TD | MD | TD |
| **Unfilled** | | | | | | | | |
| Before | 21.2 | 22.0 | 31 | 5.4 | 1.6 | .28 | 3.9 | 4.7 |
| After | 14.3 | 14.1 | 36 | 9.1 | 1.6 | .46 | 4.0 | 6.5 |
| % Change | -33 | -36 | 16 | 69 | 0 | 64 | 3 | 38 |
| Before | 15.6 | 18.0 | 56 | 5.6 | 4.0 | .26 | 1.8 | 5.8 |
| After | 11.3 | 10.8 | 55 | 12 | 3.8 | .52 | 1.8 | 7.0 |
| % Change | -28 | -40 | -2 | 114 | -5 | 100 | 0 | 21 |
| Before | 7.5 | 8.9 | 80 | 3.3 | 5.8 | .25 | 1.5 | 1.8 |
| After | 6.1 | 6.9 | 75 | 6.7 | 5.7 | .34 | 1.4 | 4.8 |
| % Change | -19 | -22 | -6 | 103 | -2 | 36 | -7 | 167 |

| **Mineral-Filled** | | | | | | | | |
|---|---|---|---|---|---|---|---|---|
| Before | 22.5 | 23.0 | 8 | 3.2 | 1.3 | .50 | 1.2 | 1.0 |
| After | 16.1 | 14.5 | 9 | 4.8 | 1.8 | .72 | 1.4 | 1.2 |
| % Change | -28 | -37 | 12 | 50 | 38 | 44 | 17 | 20 |
| Before | 18.5 | 19.0 | 14 | 1.7 | 2.0 | .54 | 1.5 | 0.3 |
| After | 15.1 | 13.1 | 15 | 4.7 | 1.6 | .55 | 2.5 | 1.6 |
| % Change | -18 | -31 | 7 | 176 | -20 | 2 | 67 | 433 |
| Before | 9.9 | 10.0 | 16 | 2.2 | 2.1 | .41 | 1.3 | 0.7 |
| After | 7.9 | 6.4 | 13 | 4.6 | 1.8 | .59 | 1.5 | 1.1 |
| % Change | -20 | -36 | -19 | 109 | -14 | 44 | 15 | 57 |

| | Average % Change | | | | | | | |
|---|---|---|---|---|---|---|---|---|
| Unfilled | -27 | -33 | 3 | 95 | -2 | 67 | -1 | 75 |
| Mineral-Filled | -22 | -35 | 0 | 112 | 1 | 30 | 33 | 170 |

Many variations of the present invention are possible. The invention is not limited to the embodiments illustrated and described but encompasses all the subject matter within the scope of the appended claims.

## Claims

1. A process for reducing the anisotropy of an extruded liquid crystal polymer film having an anisotropic molecular orientation, comprising: calendering said extruded liquid crystal polymer film in a direction other than in which said film has said molecular orientation, with at least one roll having a temperature sufficient to soften, but not liquify said film.

2. A process according to claim 1 wherein said film is calendered by passing said film between two nip rolls having a gap therebetween that is smaller than the thickness of said film, both said rolls having a temperature sufficient to soften said film.

3. A process according to claim 2 wherein said calendering direction is approximately perpendicular to said direction of orientation.

4. A process according to claim 1 wherein said calendering direction is approximately perpendicular to said direction of orientation.

5. A process according to claim 1 further comprising placing a release film between said polymer film and said roll to prevent adhesion of said polymer film to said roll during calendering.

6. A process according to claim 1 wherein said temperature is in the approximate range of 150-270 °C.

7. A process for treating a liquid crystal polymer film having an anisotropic orientation comprising the steps of:
- heating a pair of nip rolls to a temperature sufficient to soften said film;
- sandwiching said film between layers of a release film;
- adjusting the gap between said rolls to produce a film having more balanced properties, said gap size being less than the thickness of said film sandwich and,
- calendering said polymer film by feeding said film sandwich through said gap in said rolls in a direction approximately, perpendicular to the direction of anisotropic orientation.

8. A process according to claim 7 wherein said temperature is in the approximate range of 150-270 °C.

## Patentansprüche

1. Verfahren zur Verminderung der Anisotropie von extrudierten Flüssigkristall-Polymerfolien mit anisotroper Molekülorientierung, das darin besteht, daß das Ziehen der extrudierten Flüssigkristall-Polymerfolie in einer anderen Richtung erfolgt als der, in der die Folie ihre Molekülorientierung aufweist, wobei zumindest eine Walze eine zur Erweichung, jedoch nicht zur Verflüssigung der Folie ausreichende Temperatur besitzt.

2. Verfahren nach Anspruch 1, wobei das Folienziehen dadurch erfolgt, daß man die Folie über ein Abquetschwalzenpaar führt, deren Spalt kleiner ist als die Foliendicke, wobei beide Walzen eine zur Erweichung der Folie ausreichende Temperatur besitzen.

3. Verfahren nach Anspruch 2, wobei die Folienziehrichtung in etwa senkrecht zur Orientierungsrichtung verläuft.

4. Verfahren nach Anspruch 1, wobei die Folienziehrichtung in etwa senkrecht zur Orientierungsrichtung verläuft.

5. Verfahren nach Anspruch 1, wobei weiterhin zwischen der Polymerfolie und der Walze eine Trennfolie angebracht wird, um zu verhindern, daß die Polymerfolie beim Folienziehen an der Walze klebt.

6. Verfahren nach Anspruch 1, wobei die genannte Temperatur in etwa im Bereich 150-270°C liegt.

7. Verfahren zur Umarbeitung von Flüssigkristall-Polymerfolien mit anisotroper Orientierung, bestehend aus den Schritten:
- Erhitzen eines Abquetschwalzenpaares auf eine zur Erweichung der Folie ausreichende Temperatur,
- Anfertigen eines Foliensandwich durch Anbringen einer Trennfolienschicht auf beiden Seiten der Folie,
- Einstellen des Walzenpaarspaltes in solch einer Weise, daß eine Folie mit ausgeglicheneren Eigenschaften entsteht, wobei die Spaltgröße geringer ist als die Dicke des Foliensandwich, sowie
- Ziehen der Polymerfolie, indem man den Foliensandwich über die Walzen durch den Spalt hindurch in einer in etwa senkrecht zur anisotropen Orientierungsrichtung verlaufenden Richtung führt.

8. Verfahren nach Anspruch 7, wobei die genannte Temperatur im Bereich von etwa 150-270°C liegt.

## Revendications

1. Procédé de réduction de l'anisotropie d'un film de polymère cristal liquide extrudé ayant une orientation moléculaire anisotrope, comprenant : le calandrage dudit film de polymère cristal liquide extrudé dans une direction autre que celle dans laquelle ledit film a ladite orientation moléculaire, avec au moins un cylindre ayant une température suffisante pour ramollir, mais non pour fondre ledit film.

2. Procédé selon la revendication 1, caractérisé en ce que l'on calandre ledit film en le faisant passer entre deux cylindres de laminage ayant entre eux un espacement qui est inférieur à l'épaisseur dudit film, les deux dits cylindres ayant une température suffisante pour ramollir ledit film.

3. Procédé selon la revendication 2, caractérisé en ce que ladite direction de calandrage est approximativement perpendiculaire à ladite direction d'orientation.

4. Procédé selon la revendication 1, caractérisé en ce que ladite direction de calandrage est approximativement perpendiculaire à ladite direction d'orientation.

5. Procédé selon la revendication 1, comprenant de plus la mise en place d'un film de séparation entre ledit film de polymère et ledit cylindre pour éviter l'adhérence dudit film de polymère audit cylindre pendant le calandrage.

6. Procédé selon la revendication 1, caractérisé en ce que ladite température est dans la gamme approximative de 150-270°C.

7. Procédé de traitement d'un film de polymère cristal liquide ayant une orientation moléculaire anisotrope, comprenant les étapes de :
chauffage d'une paire de cylindres de laminage à une température suffisante pour ramollir ledit film;
mise en sandwich dudit film entre les couches d'un film de séparation;
ajustement de l'espacement entre lesdits cylindres pour produire un film ayant des propriétés plus équilibrées, ladite dimension d'espacement étant inférieure à l'épaisseur du sandwich dudit film et,
calandrage dudit film de polymère en introduisant le sandwich dudit film à travers ledit espacement desdits cylindres dans une direction approximativement perpendiculaire à la direction de l'orientation anisotrope.

8. Procédé selon la revendication 7, caractérisé en ce que ladite température est dans la gamme approximative de 150-270°C.
